Europäisches Patentamt

**European Patent Office**

**Office européen des brevets**

(19)

(11) Publication number: **0 092 059**
**A1**

(12)

# EUROPEAN PATENT APPLICATION

(21) Application number: **83102769.3**

(22) Date of filing: **21.03.83**

(51) Int. Cl.³: **C 10 G 11/14, B 01 J 29/38**

(30) Priority: **19.04.82 US 369861**

(43) Date of publication of application: **26.10.83**
**Bulletin 83/43**

(84) Designated Contracting States: **AT BE DE FR GB IT NL SE**

(71) Applicant: **ASHLAND OIL, INC., R.C. Willson, Jr. P.O. Box 391, BL-5, Ashland Kentucky 41114 (US)**

(72) Inventor: **Hettinger, William P., Jr., 203 Meadowlark Road, Russell Kentucky 41169 (US)**

(74) Representative: **Lambert, Hugh Richmond et al, D. YOUNG & CO. 10 Staple Inn, London, WC1V 7RD (GB)**

(54) **Regeneration of catalyst used in the conversion of carbo-metallic containing residual oils.**

(57) A two stage (22, 34) regeneration operation under sequential endothermic and exothermic temperature restricted conditions to remove high levels of carbonaceous material contributed by feeds of Conradson carbon content in the range of 2 to 20 is discussed. Initial removal of carbonaceous material of at least 40 percent is accomplished primarily with steam (25) and $CO_2$ followed by removal of residual carbonaceous material with oxygen under $CO_2$ flue gas producing conditions subsequentially employed in said endothermic operation with steam.

## REGENERATION OF CATALYST USED IN THE
## CONVERSION OF CARBO-METALLIC CONTAINING RESIDUAL OILS

The present invention is particularly concerned with the method and technique for regenerating a cracking catalyst comprising relatively high levels of deposited hydrocarbonaceous materials and metal contaminants. Sulfur and nitrogen contaminants are also included as deposited contaminants.

The well-known process of relatively clean gas oil feed fluid catalytic cracking (FCC) is not designed or tailored for use in the catalytic conversion of carbo-metallic containing oil feeds known as residual oils or reduced crudes comprising carbo-metallic high molecular weight hydrocarbon components boiling above 552°C (1025°F) and effecting regeneration of catalyst particles used therein. Gas oil fluid catalytic cracking operations are generally restricted to processing relatively clean feeds comprising less than one weight percent of Conradson carbon and comprising small amounts of metal contaminants of Ni, V, Fe and Cu in amounts preferably less than about 0.5 ppm. The zeolite containing catalysts employed currently in gas oil fluid catalytic cracking operations are generally discarded when their catalytic MAT activity is below about 70% and a contaminant metals loading has reached from 1000 to 3000 Ni + V.

Fluid catalytic cracking was developed for the conversion of select relatively clean fractions or portions obtained from crude oils to produce particularly gasoline and heating fuels. The select feedstock for FCC gas oil operations comprise predominantly atmospheric and vacuum gas oils, generally boiling below about 552°C (1025°F) and most desirably comprise a low Conradson carbon content, below 1 wt%, a low metals content, below 0.5 ppm Ni + V and are also low in sulfur and nitrogen components and obtained by prehydrogenation of the feed. More typical (GO) gas oil feedstocks comprising atmospheric and vacuum gas oils contain less than 0.5 wt% Conradson carbon and 0.1-0.2 ppm Ni + V. The boiling range of gas oil is generally above about 343°C (650°F) up to about 552°C

RI-6091A

(1025°F) but may go to 565°C (1050°F) with some clean crude oils. The gas oil feed for an FCC operation is preheated to a temperature in the range of 260-427°C (500-800°F) and thus is substantially completely vaporized immediately upon contact with hot regenerated catalyst at temperatures in the range of 621-787°C (1150-1450°F) This complete vaporization of the feed by the catalyst in a riser reactor results in a relatively high conversion (>70%), high gasoline product selectivities (>70%) and most usually low carbon values (<1 wt% on catalyst, about 4 wt% on feed). The catalyst so utilized gradually accumulates some metal contaminants after an extended period of operation in the range of about 500-3000 ppm Ni + V before the catalyst is gradually and/or continuously replaced with fresh catalyst added to maintain an equilibrium state of conversion and metals level. The FCC process as practiced today provides high coke and gas makes at the elevated metal levels with a lowered gasoline selectivity, thus necessitating considerable catalyst withdrawal and additions of fresh catalyst as makeup. Secondly, the coke make or carbon deposition as hydrocarbonaceous material on the catalyst in gas oil cracking is relatively low by comparison with more severe operations such as provided by reduced crude cracking operations. Also for metallurgical reasons and preservation of catalyst activity, it is desirable to restrict regeneration temperatures generally below 815°C (1500°F) and more usually in the range of 621°C (1150°F) to 760°C (1400°F). However, processing reduced crudes and residual oils of high Conradson carbon under FCC operating conditions and particularly restricted catalyst regeneration conditions with known FCC catalysts is a most difficult problem because of the high levels of carbonaceous material on the catalyst contributing to reduced catalyst life and requiring relatively high catalyst inventory. Reduced crude catalytic processing goes against substantially all processing principles practiced in gas oil FCC technology in the (1) reduced crudes charged for catalyst contact are only partially

RI-6091A

vaporized; (2) reduced crudes have a higher metals content resulting in high metals deposition and rapid accumulation on catalyst particles; (3) reduced crudes have a high Conradson carbon value contributed by naphthenes, aromatics and asphaltenes; and (4) processing reduced crudes and residual oils comprising materials boiling above 552°C (1025°F) contributes to high deposition of hydrocarbonaceous material on the catalyst and thus high temperatures generated by oxygen combustion thereof during regeneration is the norm in the absence of elaborate control systems.

In reduced crude processing one must necessarily give consideration to high metals loading on catalyst, high carbon and hydrogen deposition on catalyst, maintaining unit heat balance, avoiding catalyst inactivation temperatures, and more particularly maintaining catalyst activity under the severity of conditions encountered.

The processing of residual oils and reduced crudes comprising carbo-metallic high molecular weight components such as asphaltenes, polycyclic aromatics, nitrogen containing molecules and porphyrins in a reduced crude cracking (RCC) operation deposits a large amount of coke in the form of hydrocarbonaceous material on the RCC catalyst. Also deposited are metal deposits of the cracking operations such as nickel, vanadium, sodium, iron, copper as well as sulfur and nitrogen compounds in various quantities depending upon feed source. Following cracking of such reduced crude feeds and mechanical separation of the vaporous products of cracking from catalyst, the separated catalyst is stripped usually with steam to remove entrained vaporous material before passing the stripped catalyst to catalyst regeneration for removal of deposited hydrocarbonaceous material by burning with an oxygen containing gas such as air.

A review of pertinent prior art having a bearing on reduced crude cracking and particularly the regeneration of metals

RI-6091A

contaminated catalyst comprising high levels of deposited hydrocarbonaceous materials has been less than lucrative for teachings directed to dissipating high levels of carbon burning heat to provide a regenerated catalyst of low or no residual carbon residue.

U.S. Patent 2,606,430 teaches high temperature carbonization and gasification of coke produced by cracking to produce synthesis gas. Temperatures of about 1093°C (2000°F) are contemplated in the gasification zone.

U.S. Patent 3,726,791 teaches that high Conradson carbon feeds are coked to lay down carbonaceous deposits on a gasification catalyst. The catalyst so coked is then steam gasified to produce hydrogen.

U.S. Patent 3,433,732 teaches catalytic hydrocracking and steam regeneration of the catalyst to produce hydrogen.

Canadian Patent 875,528 teaches contacting a coked catalyst with oxygen and carbon dioxide to produce carbon monoxide. The carbon monoxide is reacted with steam over a catalyst to form hydrogen and carbon dioxide.

U.S. Patent 2,414,002 teaches a two-stage catalyst regeneration operation which separates regeneration flue gases from each stage of controlled oxygen regeneration. This patent does not speak to the problems of regenerating catalyst comprising the heavy deposits of reduced crude cracking.

U.S. Patent 4,009,121 directed to the control of regeneration temperatures relies upon the use of steam coils in the catalyst bed.

U.S. Patent 3,563,911 describes a two-stage catalyst regeneration operation employing oxygen containing gas in each stage to remove up to 65% of carbonaceous deposits in the first stage.

U.S. Patent 3,821,103 discloses a two-stage regeneration operation with oxygen containing gas such as air. The flue gas of the second stage does not contribute heat to the first stage of

RI-6091A

catalsyt regeneration nor is the use of steam therewith contemplated in the first stage of regeneration.

U.S. Patent 4,118,337 discloses two stages of catalyst regeneration with oxygen containing gas wherein hot regenerated catalyst of the second stage is added to the first stage regeneration to increase the heat level thereof.

U.S. Patent 4,276,150 teaches cracking of a reduced crude and effecting a first partial regeneration thereof with steam and oxygen in a gasifier at a temperature in the range of 593 to 1204°C (1100 to 2200°F). In this operation the second stage regeneration flue gases are separated rather than contributing heat to the first stage of regeneration by utilization with a steam air mixture in the first regeneration step referred to as a stripper gasifier.

## Summary of the Invention

The present invention is directed to the regeneration of fluid catalyst particles contaminated with hydrocarbonaceous deposits, metals, sulfur and nitrogen compounds such as obtained in reduced crude cracking operations. In a particular aspect the present invention is directed to a regeneration technique which relies upon two separate stages of fluid catalyst regeneration positioned one above the other and following a catalyst stripping operation in which the first stage of catalyst regeneration relies in substantial measure upon the partial removal of hydrocarbonaceous material with a steam oxygen mixture comprising hot flue gas combustion products under conditions to form CO and hydrogen at least partially combined therein in combination with a second stage of catalyst regeneration relied upon to complete substantially complete removal of residual carbonaceous material (coke) with oxygen rich gas under temperature conditions restricted to preferably limit the temperature below 815°C (1500°F) and more usually below about 760°C (1400°F).

RI-6091A

The use of steam in the presence of oxygen and combustion flue gas products of the second stage of catalyst regeneration in a first stage of catalyst regeneration effectively provides carbonaceous material removal temperatures up to about 732°C (1350°F) and reduces the carbonaceous material level of the catalyst by at least about 40 percent before being subjected to oxygen regeneration higher temperature conditions in the second stage of regeneration. The regeneration operating technique of this invention permits restricting the overall regeneration temperatures below about 815°C (1500°F) and preferably below 760°C (1400°F) which is not possible in a single stage dense fluid bed catalyst regeneration operation for removal of high levels of hydrocarbonaceous material deposit such as obtained in cracking reduced crudes to provide catalyst particles of low residual coke. Thus, the particular combination regeneration operation of this invention because of temperature constraints provided by the operation permits one to increase the amount of Conradson carbon content of the feed that can be processed over the catalyst with high levels of carbonaceous material deposition and also permits one to use poorer quality feeds under catalytic conversion conditions to more suitable products.

The use of a relatively large quantity of steam in the first stage of catalyst regeneration in combination with some oxygen providing combustion heat is of such quantity and temperature when combined with the hot flue gas products of the second stage of regeneration at a temperature up to about 760°C (1400°F) serves to effectively remove a substantial portion of the hydrocarbonaceous deposits at temperatures up to 732°C (1350°F) be reacting steam with carbonaceous deposits to form carbon monoxide and hydrogen. Thus, the hot flue gas components of CO, $CO_2$ and oxygen recovered from the second stage of regeneration and charged with steam as herein provided to the first regeneration stage are adjusted in concentration to one another to particularly promote the

RI-6091A

removal of hydrocarbonaceous material under controlled endothermic and exothermic reaction conditions to achieve the results desired. That is, the flue gas product stream of the first stage of catalyst regeneration will include reaction products of restricted oxygen combustion including steam reforming products of CO and hydrogen in the presence of CO2.

The removal of sulfur and nitrogen components in the hydrocarbonaceous deposits will also accompany the flue gas products of the first stage regeneration.

The processing of a reduced crude in a fluid catalytic cracking reaction zone deposits relatively large amounts of coke on the catalyst. The amount of coke deposited on the catalyst is observed to be a function of the catalyst cracking activity and the Conradson carbon value of a reduced crude feed in the range of 2 to 20 weight percent. This can be expressed as 4 weight percent plus the feed Conradson carbon content. The ability of a catalyst single stage regeneration operation to handle coke of catalyst is considered limited to approximately a 2 weight percent Conradson carbon or approximately (4+2)=6 weight percent coke based on feed. In an RCC process we are concerned with a weight of coke on catalyst as high as 12-15 weight percent based on feed which is far above that which can be properly handled in a single stage of catalyst regeneration. Thus the feed Conradson carbon value will be in excess of 4 or 6 weight percent and up to about 12 or 16 weight percent. To remove such a high coke load from catalyst particles in a single stage is most difficult because of the excessive and high regeneration temperature encountered above 815°C (1500°F), which can irreversably hydrothermally damage the catalyst activity and selectivity of a crystalline zeolite catalyst in the presence of formed steam as well as provide severe apparatus metallurgical problems requiring the use of expensive alloys and refractory linings.

In a two stage, stacked, one above the other, catalyst regeneration operation or other displaced arrangement, it is difficult

RI-6091A

to control oxygen combustion regeneration conditions and such is aggrevated when one zone is positioned above the other such as provided by Luckenbach 3,494,858 so that the flue gas products of the bottom second stage pass upwardly through the catalyst in the · first stage of catalyst regeneration and necessarily contribute heat thereto. Also, if one charges all of the oxygen required for coke combustion as air to the bottom regeneration zone, the quantity and velocities of regeneration gas and flue gas products will necessarily be high in order to also fluidize a catalyst bed in the upper first stage regeneration zone and such high velocities can entrain or transport an undesired substantial amount of regenerated catalyst from the bottom bed into its dispersed phase and up into the upper dense fluid catalyst bed comprising the first stage of regeneration.

In order to reduce the problems above identified and improve the technique for removing high levels of hydrocarbonaceous material deposits in a sequence of at least two stacked and sequentially arranged regeneration zones as herein provided a portion of the required regeneration air to achieve desired oxygen combustion is introduced to a bottom portion of each of a dense fluid bed of catalyst in each of said separated regeneration zones. The distribution of regeneration gas such as air to each zone may be of equal portion or a higher or lower portion may be employed in the lower catalyst bed than in the upper bed of catalyst depending on condition desired. In the regeneration arrangement of this invention it is contemplated employing a greater portion of oxygen containing regeneration gas such as air in the lower most bed of catalyst than in the upper catalyst bed being regenerated to particularly remove residual carbon of the first stage regeneration. The combustion products of the second regeneration zone and any unreacted oxygen in the CO2 rich flue gas therefrom will pass upwardly and be distributed across the bottom portion of the upper catalyst bed being regenerated in the presence of steam and oxygen charged to the first stage of regeneration as required to produce

RI-6091A

CO and hydrogen. Utilizing an additional air inlet to the upper bed of catalyst, added in admixture with steam or separately thereto, is provided in a volume sufficient to provide some exothermic combustion heat to support the endothermic steam partial regeneration of the catalyst in the presence of second stage hot combustion products charged thereto according to the concepts of this invention.

In one specific embodiment steam is added with some supplemental air and charged for contact with a bottom cross sectional portion of the upper catalyst bed comprising hydrocarbonaceous deposits to be removed by the regeneration combination of this invention. Regeneration of catalyst in the upper bed with oxygen (air) - steam mixture in the presence of flue gas products is preferably effected at a temperature within the range of 677°C to 732°C (1250°F to 1350°F). The steam-air combustion flue gas mixture has the dual function of effecting removal of relatively large amounts of hydrocarbonaceous deposits amounting to at least 40 to more weight percent and comprising some high molecular weight polynuclear aromatic material by the combination of partial combustion at a temperature up to 732°C (1350°F) and steam reforming to produce gaseous components comprising CO and hydrogen partially combusted in the first stage of regeneration.

In a more particular aspect, the presence of steam in the first stage of regeneration performs the function of removing a substantial amount of heavy adsorbed hydrocarbons by endothermic conversion to CO and hydrogen under carefully controlled and restricted temperature conditions. The overall net effect of the combination two stage regeneration operation is to effectively lower the upper regeneration temperature encountered by removing a substantial portion of the oxidizable carbonaceous material under restricted endothermic temperature conditions as herein provided. Thus, regeneration of the catalyst at any given level of

RI-6091A

hydrocarbonaceous deposits in the presence of heavy residual hydrocarbons can be accomplished at lower temperatures than is possible with oxygen regeneration alone. Furthermore, one can now effect catalytic cracking of the higher Conradson carbon crudes without worrying about encountering undesired high regeneration temperatures in the absence of attendant processes for removal of these coke producing materials before cracking the encompassing hydrocarbon feed as in now the current practice by propane deasphalting, coking, vacuum distillation, hydrogenation and other processes suitable for the purpose and combinations thereof. Thus, it is clear that one following the concepts of this invention can process reduced crudes and other high boiling portions of crude oils of high Conradson carbon providing carbon levels above about 6 such as feed materials providing carbon levels in the range of 10 to 15 or more based on feed.

The fluid catalyst composition contemplated for use in this invention is preferably a high activity cracking catalyst comprising a crystalline aluminosilicate or zeolite such as a crystalline "Y" faujasite catalytically activated by exchange with ammonia and one or more rare earth metals to remove sodium therefrom. The crystalline zeolite is dispersed in an amount in the range of 5 to 60 weight percent in a matrix material comprising one or more of silica, alumina, or silica alumina to which matrix material is added a clay material selected from the group consisting of kaolin, holloysite, montmorilonite, heat and chemically modified clays such as meta kaolin and acid treated holloysite and bentonite. One or more various relatively large pore crystalline zeolites may be employed in the catalyst particle complex in combination with a matrix material providing a large pore volume in excess of 0.22 cc/gm and more usually at least about 0.3 or 0.4 cc/gm.

The combination regeneration operation of this invention is directed to a temperature controlled heat balanced regeneration operation which employs a novel combination of regeneration

RI-6091A

processing steps for removing high levels of hydrocarbonaceous deposits of reduced crude cracking from catalyst particles in the absence of obtaining undesired significant hydrothermal degradation of the catalyst particles.

Thus, it has been found, contrary to the teachings of the prior art that high levels of hydrocarbonaceous material deposits on catalyst particles can be used to considerable advantage as a protector of the catalyst cracking activity during partial removal of carbonaceous deposits comprising hydrogen and carbon with steam under conditions to form syngas comprising CO and hydrogen. In this operating environment it is also found possible to remove from 40 to 60 weight percent of the deposited carbonaceous material in the first stage of endothermic catalyst regeneration by the combination of steam reforming and oxygen partial combustion sufficient for supplying a portion of the endothermic heat requirements of the steam reforming operation without significantly contributing to hydrothermal degradation fo the catalyst cracking activity concommitantly with maintaining desired low regeneration temperatures preferably not substantially above about 760°C (1400°F).

In yet another embodiment, the present invention contemplates the removal of at least a portion of the hydrocarbonaceous deposits in the first stage regeneration operation at temperatures of at least 760°C (1400°F) by contact with steam and by the reactions of CO2 with hydrogen and carbon in the hydrocarbonaceous deposits. Thus, the competing reactions of partial oxygen combustion of hydrocarbonaceous deposits to provide a substantial portion of the endothermic heat requirements of steam reforming and promote the reactions of CO2 with carbon and hydrogen in the first regeneration zone is regulated and promoted so that a majority or greater than 50 wt% of the deposited hydrocarbonaceous material is so removed in the first stage of catalyst regeneration. The catalyst so contacted is maintained preferably in a relatively dense fluid catalyst bed

RI-6091A

phase providing relatively uniform temperature in this first dense catalyst phase to minimize hydrothermal temperature excursions and degradation of catalyst particles so guardedly contacted.

The catalyst thus partially regenerated and comprising residual carbonaceous material and more appropriately referred to as residual carbon substantially freed of hydrogen is then contacted with a sufficient excess of oxygen containing gas such as air or oxygen modified regeneration gas to complete desired combustion removal of the residual carbon without exceeding desired temperatures. A second dense fluid catalyst bed phase contributing to relatively uniform temperature combustion of residual carbon on the catalyst particles is particularly preferred. It will be recognized by those skilled in the art that the concentration of catalyst particles forming the dense fluid beds of catalyst particles may be varied over a considerable range of from about 20 pounds per cubic foot up to about 35 or 40 pounds per cubic foot. Generally, the concentration of particles will be within the range of 35 to 40 pounds per cubic foot. In the regeneration sequence contemplated by this invention, it is intended to reduce residual carbon on regenerated catalyst to a level of at least 0.1 wt% and preferably at least 0.05 wt% or less without exceeding catalyst regeneration temperatures substantially above about 760°C (1400°F) or so high as to significantly hydrothermally deactivate the catalyst.

## Brief Description of the Drawings

Figure I is a diagrammatic sketch in elevation of one arrangement of apparatus for practicing the catalytic conversion of high boiling hydrocarbons comprising reduced crudes and effecting regeneration of the catalyst so used in a plurality of dense fluid catalyst beds following the concepts and techniques of this invention.

RI-6091A

Figure II is a graph depicting a study directed to the removal of coke from a catalyst with steam.

Figure III is a graph depicting the effect of steam at 787°C (1450°F) on surface area of a commercially available catalyst with and without coke deposits identified as GRZ-1 by Davidson Chemical Company.

Figure IV is a graph depicting the effect of steam contact time on the catalyst zeolite intensity whether coked or not coked.

Discussion of Specific Embodiments

Referring now to Figure I by way of example, there is shown a riser cracking zone 4, a catalyst disengaging zone 8 and catalyst stripping zone 14 adjacent to a two-stage catalyst regeneration arrangement 20 comprising stacked catalyst beds 22 and 34 above the other so that flue gas products of the bottom regeneration section comprising bed 34 can pass upwardly into the bottom portion of dense fluid catalyst bed 22 being regenerated in the upper regeneration section.

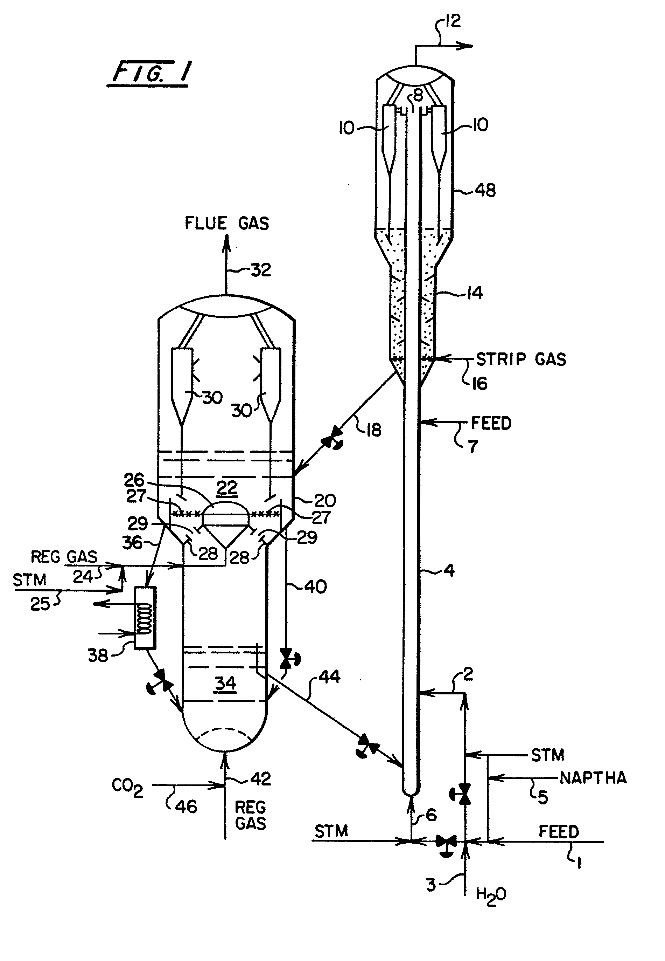

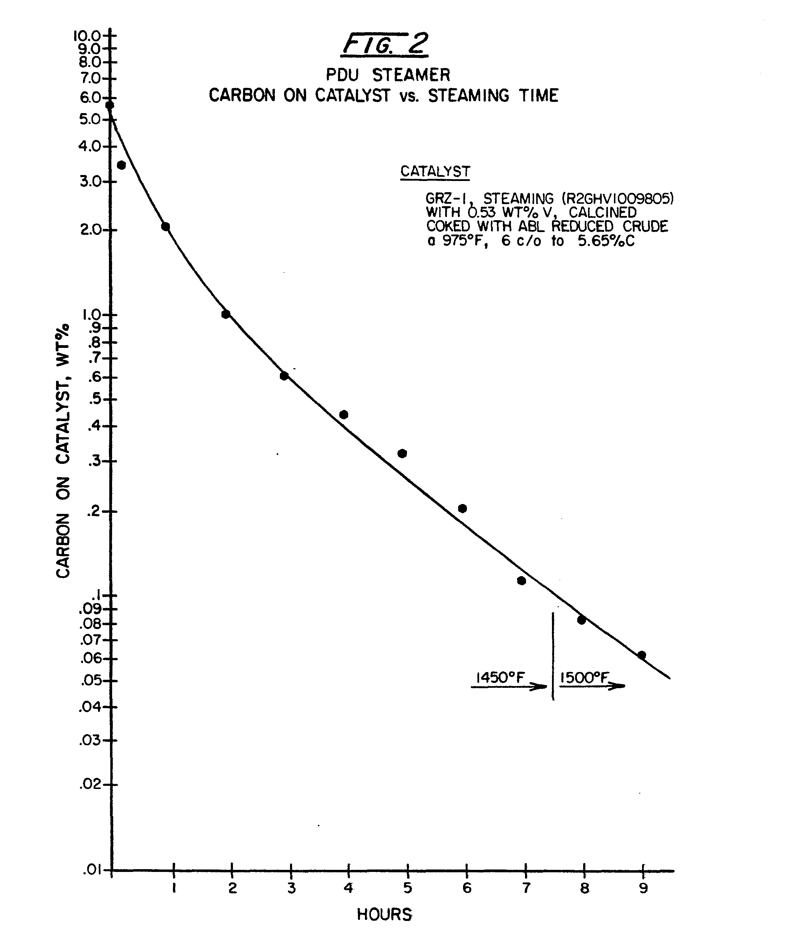

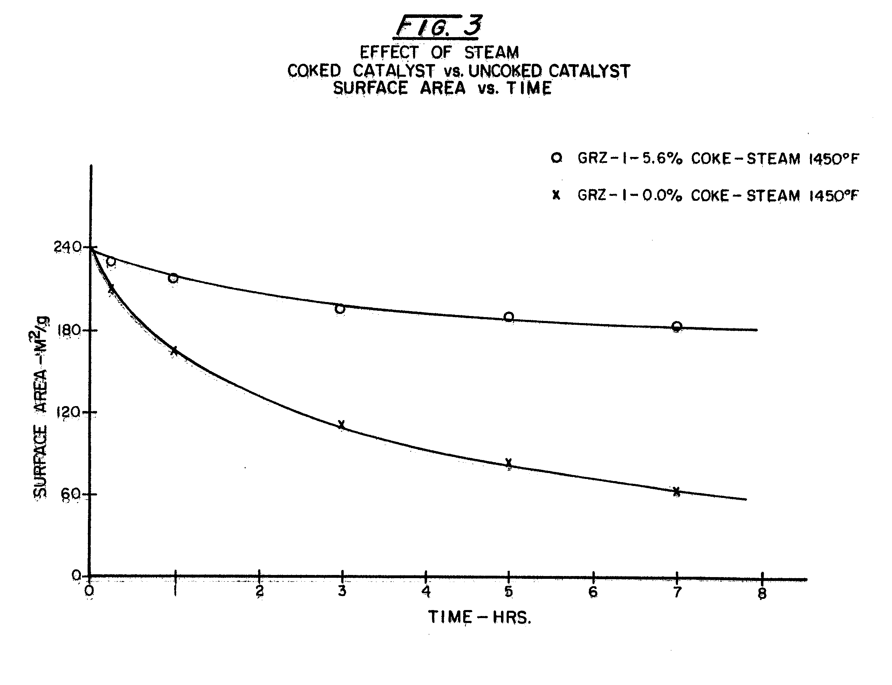

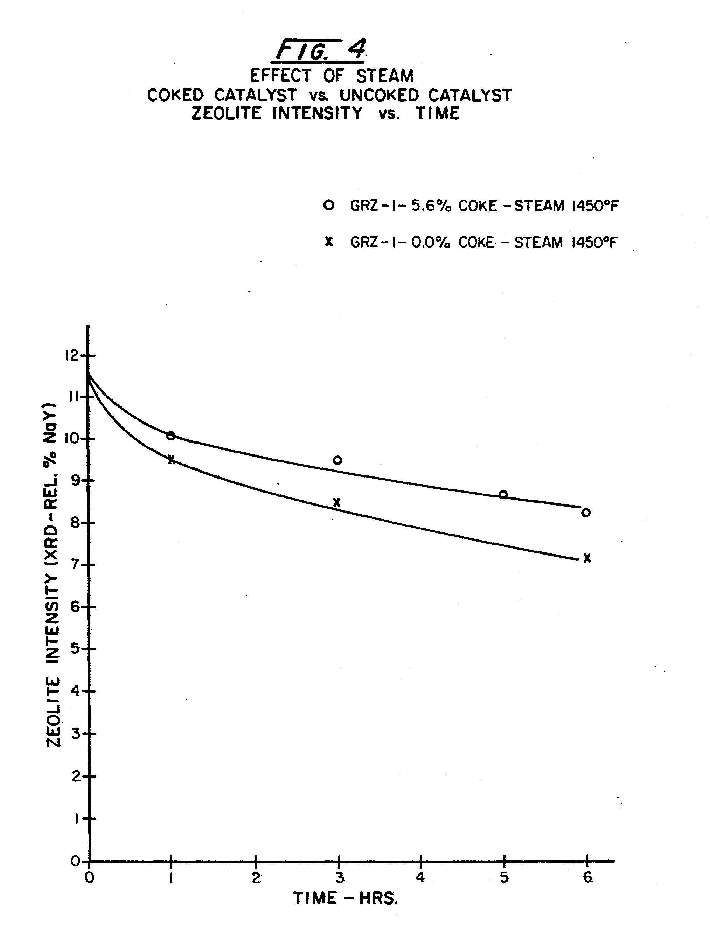

In this arrangement of the drawing, Figure I, a reduced crude is charged by conduit 1 in admixture with one or more of steam, naphtha, water, and other such materials and for their use as disclosed in copending application U.S. Serial No. 094,227 filed November 14, 1979, the subject matter of which is incorporated herein by reference thereto. These materials used as diluent or reactant material contributes as hydrogen donor material, a reductant and promote steam reforming. The materials are also considered as a temperature adjustment material, a velocity providing material, a feed partial pressure reducing material. A combination thereof also assures intimate rapid atomized and vaporized contact of the reduced crude with charged finely divided fluidizable catalyst particles to provide an upwardly flowing suspension at an elevated hydrocarbon conversion temperature sufficiently elevated to provide a riser outlet temperature in the

RI-6091A

range of 510 to 566°C (950 to 1050°F). The upwardly flowing suspension in riser 4 is at a velocity selected to provide a hydrocarbon contact residence time with catalyst in the riser within the range of 0.5 to 4 seconds and more usually in the range of 1 to 2 seconds. Shorter hydrocarbon residence time may also be provided by charging the reduced crude through inlet means above the riser bottom as by inlet 2 and 7 shown in the presence of one or more suitable diluent reactant materials above identified. Steam, naphtha or other light hydrocarbons may be used to initially fluidize the hot catalyst particles charged to the riser bottom before contact with a reduced crude charge by either conduit 2 or 7. At the riser exit 8, the suspension following traverse of the riser is separated by the means shown or by the method and means of U.S. Patents 4,066,533 and 4,070,159 incorporated herein by reference thereto so that vaporous materials pass through cyclones for removal by conduit 12 and separation in downstream equipment not shown. Catalyst particles separated by ballistic separation and cyclone separation are collected in a lower annular stripping zone 14 for countercurrent contact with stripping gas such as steam or other suitable high temperature gas such as $CO_2$ introduced by conduit 16. Stripped catalyst particles comprising a heavy load of hydrocarbonaceous deposits and metal contaminants pass from stripper 14 by conduit 18 provided with a flow control valve to a dense bed of catalyst 22 in the upper portion of regeneration zone 20. Catalyst bed 22 comprises the first stage of regeneration in accordance with the processing concepts of this invention. That is, regeneration gas such as air introduced by conduit 24 is mixed with steam introduced by conduit 25 and the mixed gasiform material, predominantly steam at a temperature in the range of 121 to 371°C (250 to 700°F) is charged to plenum chamber 26 and thence by distributor arms 27 to a bottom lower portion of bed 22 for admixture with flue gases obtained as provided below and charged through a grid means 28 with openings 29. That is, separator

RI-6091A

baffle or grid means 28 is provided with a plurality of small gas flow through openings represented by 29 for passage of flue gases therethrough and obtained from the second stage of catalyst regeneration as more fully discussed below.

It is contemplated modifying the arrangement above discussed so that the baffle 28 is non-porous and the flue gases of the second stage regeneration comprising bed 34 are caused to flow into the plenum 26 for admixture with the steam-air mixture prior to entering bed 22 by distributor arms 27. On the other hand, flue gases from bed 34 may be passed through external cyclones for removal of catalyst fines and returned to the vapor dispersed phase of catalyst above bed 34 before passing the flue gases freed of catalyst in admixture with steam to a bottom portion of bed 22.

In any of the above arrangements, the catalyst in dense fluid bed 22 is partially regenerated with steam and $CO_2$ supplemented with some oxygen containing gases furnished in part by flue gases obtained from the lower bed 34 and in part by being enriched with the air-steam mixture in conduits 24 and 25 and added by gas distributor arms 27 connected to plenum 27. Partial regeneration of the catalyst in bed 22 is accomplished as herein discussed under steam reforming conditions at temperatures within the range of 677 to 787°C (1250 to 1450°F). Flue gas products of regeneration pass through cyclone separator means 30 before being withdrawn by conduit 32 for use as desired.

The partially regenerated catalyst in bed 22 is passed to suitable withdrawal wells adjacent the bed periphery and communicating with standpipes 36 and 40 respectively. All or a portion of the partially regenerated catalyst may be passed by either one or both of standpipes 36 and 40 with or without partial cooling of catalyst in standpipe 36 before passing to catalyst bed 34 in the lower regenerator section as shown. On the other hand, heating or cooling of the catalyst in standpipe 36 may be

RI-6091A

accomplished in zone 38 as desired before passing the catalyst to bed 34.

In the lower catalyst regeneration zone comprising bed 34, complete regeneration by combustion of residual carbon on the catalyst to provide a residual carbon content less than 0.1 wt% and preferably no more than 0.05 wt% is accomplished with an oxygen containing regeneration gas such as air, air modified with $CO_2$, $CO_2$ modified with oxygen and a combination thereof as required to effect the desired removal of residual carbonaceous material without exceeding a temperature of 760°C (1400°F).

The transfer of catalyst from upper bed 22 to lower bed 34 may also be accomplished by one or more internal standpipes rather by the external standpipes shown in which case, cooling of catalyst is such transfer standpipes would not be accomplished.

The catalyst regenerated to a desired low level of residual carbon by the combination operation above discussed and at a desired elevated temperature in the range of 704°C (1300°F) up to about 787°C (1450°F) is passed from catalyst bed 34 by standpipe 44 provided with a flow control valve to a lower portion of riser 4 for re-use in the system as above described, thus completing the cyclic flow of catalyst in the system.

Referring now to Figure II, by way of example, there is provided a graph directed to presenting data directed to carbon removal with steam from a GRZ-1 cracking catalyst (commercially available catalyst from W. R. Grace & Co. - Davidson Chemical Division) which had been coked with Arabian Light Reduced Crude. The graph shows that the reaction of steam to remove coke or carbonaceous material is relatively fast for significant amounts of coke removal within a time span commensurate with that obtainable in a dense fluid catalyst bed regeneration operation. For example, a catalyst comprising about 5.8 wt% carbon on catalyst is reduced to a residual carbon level of about 1.0 wt% when contacted with 787°C (1450°F) steam for 2 hours. More significant, coke removal is

RI-6091A

achievable with steam at temperatures of about 760°C (1400°F) to form CO and hydrogen which materials are also combustible in the presence of added oxygen to generate needed endothermic heat as herein discussed.

Figures III and IV on the other hand, show the effect of 787°C (1450°F) steam on a coked and uncoked GRZ-1 catalyst with respect to surface area and zeolite intensity. Zeolite intensity is identified with the active zeolite component of the catalyst, the greater the intensity, the more of the active crystalline zeolite component that is present. The graphical data of Figures III and IV show that steaming of the uncoked catalyst gave a much larger drop in surface area and zeolite intensity than obtainable when contacting a coked catalyst with high temperature steam. Thus, the coke on the catalyst considerably guards the deactivation of the catalyst against high temperature steam. This finding is used to advantage in pursuit of the concepts of this invention which are directed to reducing the heat of regeneration of catalysts used in reduced crude cracking. Catalyst so used are known to accumulate large amounts of carbonaceous material attributable in substantial measure to the Conradson carbon level of the feed being processed and such high levels of deposited carbonaceous materials are instrumental in causing high temperatures to be encountered by burning removal thereof with oxygen containing gas such as air. In the absence of extreme caution, poor heat dissipation and unrestricted temperature limits by burning or combustion in a plurality of regeneration zones are less than desirable resultant conditions of regeneration. It will be recognized by those skilled in the art that the regeneration combination of this invention is not only a unique approach to the removal of relatively large amounts of carbonaceous deposits but so also is the amount of carbonaceous material to be removed by burning with oxygen containing gas sufficiently reduced to permit maintaining desired temperature restrictions below about 787°C (1450°F) and more preferably at the

RI-6091A

lowest temperature conditions promoting extended catalyst life and usage. Perhaps more important is the realization that the regeneration concept and sequence of performance contemplated by the invention permits the processing of higher Conradson carbon feeds than previously considered possible at relatively low acceptable regeneration temperatures particularly suitable for achieving desired hydrocarbon conversion results. Thus, the endothermic conversion of carbonaceous deposits (coke) with steam to a more favorable level for subsequent more complete removal of residual carbon with oxygen containing gas measurable improves the economics restraints with respect to processing more of the bottom of the barrel of a crude oil and identified more particularly as a residual oil or a reduced crude comprising carbo-metallic impurities.

Having thus generally described the new and novel concepts of this invention with respect to regenerating catalyst particles to reduce the temperature of the operation and discussed specific examples in support thereof except as defined by the following claims.

RI-6091A

We Claim:

1. In a hydrocarbon conversion process where carbonaceous material deposited on a hydrocarbon conversion catalyst is of a quantity to produce upon combustion thereof temperatures exceeding 815°C (1500°F), the improvement for reducing catalyst regeneration temperatures which comprises,

(a) partially regenerating a conversion catalyst comprising high levels of carbonaceous material deposits by contact with a gaseous mixture comprising a relatively large quantity of high temperature steam in admixture with oxygen containing gas and $CO_2$ flue gas combustion products of a residual carbon removal,

(b) said contact with said high temperature steam $CO_2$ and oxygen reacting with said carbonaceous deposits under conditions to form CO and hydrogen,

(c) recovering partially regenerated catalyst from said steam contacting step for transfer to a second stage of catalyst regeneration to remove residual carbon by combustion with oxygen containing gas and produce $CO_2$ rich flue gas,

(d) removing residual carbon on the partially regenerated catalyst by combustion with oxygen containing gas under temperature conditions restricted below about 787°C (1450°F) to produce high temperature flue gases comprising CO, $CO_2$ and unconsumed oxygen,

(e) passing said high temperature flue gases with said gaseous mixture comprising steam in contact with said catalyst partially regenerated as above provided, and

(f) recovering a regenerated catalyst comprising less than 0.05 wt% residual carbon at a temperature below about 760°C (1400°F) separately from flue gas products of said two stage regeneration operation.

RI-6091A

2.    The catalyst regeneration operation of Claim 1 wherein each stage of regeneration is accomplished in a dense fluid bed of catalyst positioned one above the other so that flue gas products of said second stage may pass directly into the bottom of the bed of catalyst comprising the first stage of catalyst regeneration.

3.    The regeneration operation of Claim 2 wherein the gaseous mixtures of steam and oxygen containing gas are separately introduced to a bottom portion of said catalyst bed comprising said first stage of regeneration.

4.    The catalyst regeneration operation of Claim 1 wherein up to about 40 percent of the carbonaceous deposit is removed by a mixture of steam, $CO_2$ and oxygen under essentially endothermic reaction conditions at a temperature below 815°C (1500°F) and residual carbon on the partially regenerated catalyst is removed by oxygen combustion at a temperature in the range of about 732°C (1350°F) up to about 787°C (1450°F).

5.    The catalyst regeneration operation of Claim 1 wherein the carbonaceous materials are deposits obtained by the catalytic conversion of a residual oil boiling above about 343°C (650°F) and comprising carbo-metallic impurities providing Conradson carbon deposits in excess of 2 weight percent.

6.    The catalyst regeneration operation of Claim 1 wherein the carbonaceous deposits to be removed are obtained by the catalytic conversion of a reduced crude providing Conradson carbon deposits in the range of 2 to 20 weight percent.

7.    The catalyst regeneration operation of Claim 1 wherein the carbonaceous deposits to be removed are obtained by the

RI-6091A

catalytic conversion of a residual oil providing Conradson carbon deposits in the range of 4 to 12 weight percent.

8. The catalyst regeneration operation of Claim 1 wherein the carbonaceous deposits to be removed are contributed by a high boiling hydrocarbon feed of at least 6 weight percent Conradson carbon.

9. The catalyst regeneration operation of Claim 1 wherein the carbonaceous deposits to be removed are contributed by a hydrocarbon feed comprising a Conradson carbon value greater than 6 weight percent.

10. A method for removing carbonaceous deposits of cracking high boiling hydrocarbons of a Conradson carbon level of at least 6 weight percent which comprises, removing at least 40 percent of said carbonaceous deposits under essentially endothermic reaction conditions up to 787°C (1450°F) with a gaseous mixture predominantly steam in admixture with $CO_2$ and a minor amount of oxygen containing gas to provide a partially regenerated catalyst, and completing the removal of carbonaceous deposits from said steam partially regenerated catalyst with oxygen containing gas under conditions to provide regenerated catalyst particles comprising less then 0.1 weight percent carbon.

RI-6091A

FIG. 1

0092059

2/4

## FIG. 2

### PDU STEAMER
### CARBON ON CATALYST vs. STEAMING TIME

CATALYST

GRZ-1, STEAMING (R2GHVI009805)
WITH 0.53 WT% V, CALCINED
COKED WITH ABL REDUCED CRUDE
a 975°F, 6 c/o to 5.65%C

1450°F → | 1500°F →

CARBON ON CATALYST, WT%

HOURS

FIG. 3

EFFECT OF STEAM
COKED CATALYST vs. UNCOKED CATALYST
SURFACE AREA vs. TIME

O  GRZ-I-5.6% COKE-STEAM 1450°F

X  GRZ-I-0.0% COKE-STEAM 1450°F

0092059

4 / 4

## FIG. 4
### EFFECT OF STEAM
### COKED CATALYST vs. UNCOKED CATALYST
### ZEOLITE INTENSITY vs. TIME

O  GRZ-1- 5.6% COKE -STEAM 1450°F

X  GRZ-1- 0.0% COKE - STEAM 1450°F

ZEOLITE INTENSITY (XRD-REL, % NaY)

TIME - HRS.

| | DOCUMENTS CONSIDERED TO BE RELEVANT | | EP 83102769.3 |
|---|---|---|---|

| Category | Citation of document with indication, where appropriate, of relevant passages | Relevant to claim | CLASSIFICATION OF THE APPLICATION (Int. Cl. 3) |
|---|---|---|---|
| P,A | US - A - 4 336 160 (ROBERT R. DEAN et al.) <br><br> * Claims; column 6, line 55 - column 9, line 68 * | 1,10 | C 10 G 11/14 <br> B 01 J 29/38 |
| P,A | US - A - 4 274 942 (BARTHOLIC et al. <br><br> * Claims; column 5, line 9 - column 6, line 2 * | 1,10 | |
| A | US - A - 4 062 759 (CASTAGNOS, JR. et al.) <br><br> * Claims; column 1, line 60 - column 3, line 55 * | 1,10 | |
| A | US - A - 4 056 486 (BUNN, JR. et al.) <br><br> * Claims; column 1, line 60 - column 3, line 5 * | 1,10 | TECHNICAL FIELDS SEARCHED (Int. Cl. 3) <br><br> C 10 G 11/00 <br> C 10 G 47/00 |
| A | GB - A - 2 001 545 (IMPERIAL CHEMICAL INDUSTRIES LIMITED) <br><br> * Claims; page 2, line 15 - page 3, line 74 * | 1,10 | B 01 J 21/00 <br> B 01 J 29/00 |
| A | GB - A - 1 569 467 (TEXACO DEVE-LOPMENT CORPORATION) <br><br> * Claims; page 1, line 89 - page 3, line 112 * | 1,10 | |

| The present search report has been drawn up for all claims | | |
|---|---|---|
| Place of search <br> VIENNA | Date of completion of the search <br> 21-07-1983 | Examiner <br> STÖCKLMAYER |